**Europäisches Patentamt**

**European Patent Office**

**Office européen des brevets**

(19)

(11) Veröffentlichungsnummer : **0 034 660**
**B1**.

(12) # EUROPÄISCHE PATENTSCHRIFT

(45) Veröffentlichungstag der Patentschrift : **22.06.83**

(51) Int. Cl.³ : **B 60 N   3/02**, F 16 B 21/16

(21) Anmeldenummer : **80107775.1**

(22) Anmeldetag : **10.12.80**

(54) **Befestigungselement, insbesondere für einen Handgriff oder eine Armlehne einer Karosserie-Innenwand.**

(30) Priorität : **22.02.80 DE 3006670**

(43) Veröffentlichungstag der Anmeldung :
**02.09.81 Patentblatt 81/35**

(45) Bekanntmachung des Hinweises auf die Patenterteilung : **22.06.83 Patentblatt 83/25**

(84) Benannte Vertragsstaaten :
**DE FR GB IT SE**

(56) Entgegenhaltungen :
**EP A 0 024 546**
**DE A 2 531 368**
**DE A 2 623 602**
**FR A 2 368 629**
**US A 3 212 391**
**US A 4 201 111**

(73) Patentinhaber : **Gebr. Happich GmbH**
**Postfach 10 02 49 Clausenbrücke 1**
**D-5600 Wuppertal 1 (DE)**

(72) Erfinder : **Janz, Joachim**
**Jägerhofstrasse 116 b**
**D-5600 Wuppertai 1 (DE)**

Jouve, 18, rue St-Denis, 75001 Paris, France

Befestigungselement, insbesondere für einen Handgriff oder eine Armlehne einer Karosserie-Innenwand

Die Erfindung bezieht sich auf ein Befestigungselement, der im Oberbegriff des Anspruchs 1 angegebenen und aus der DE-A-2 249 451 bekanntgewordenen Art.

Um rationelle, insbesondere kostengünstige Montagemöglichkeiten bei Massenartikeln zu schaffen, werden in steigender Anzahl Befestigungselemente verwendet, welche zumindest eine schnelle Montage ermöglichen, wobei es vielfach unbedeutend ist, ob die Demontage mit solchen Befestigungsmitteln ebenso zeitgünstig durchführbar ist. Entscheidend ist ferner für eine vorteilhafte Montage, wenn die Befestigungselemente so ausgebildet sind, daß sie unter Zwischenschaltung verschieden dicker Aufnahmeteile diese jeweils optimal befestigen.

Durch die bei der DE-A-2 249 451 am Einsteckbolzen über eine größere Strecke ausgebildete Verzahnung ist es möglich, unterschiedlich dicke Baukörper mit Anlage- oder sogar Preßsitz festzulegen. Die Montage von Befestigungselement zu seinem Aufnahmenippel kann durch einfaches Einstecken erfolgen, da der Aufnahmenippel von Ausbildung und Material her als Ratsche wirkt; zum Lösen des Befestigungselementes ist eine Drehung des Befestigungsbolzens notwendig, wodurch die Zähne außer Eingriff gelangen und der Befestigungsbolzen ausgezogen werden kann.

Das Befestigungselement nach der DE-A-2 249 451 ist nur sehr begrenzt einsatzfähig, insbesondere weil die Verbindung ausschließlich durch Eindrücken des Befestigungsbolzens vorgenommen werden kann, ein manueller Druck hierzu zumeist nicht ausreicht, Vorrichtungen zum Andrücken kostenaufwendig sind und teilweise wegen beengter Raumverhältnisse überhaupt nicht einsetzbar sind. Hinzu kommt, daß der wirksame Spannabstand von der Spanne der in Längsrichtung verlaufenden Zähne untereinander abhängig ist; dazu gibt es ferner zu bedenken, daß bei kleiner Spanne und demnach körperlich klein ausgebildeten Zähnen die Auszugskräfte kleiner als bei größeren Zähnen ausbildbar sind. Insgesamt ist anzuführen, daß ein zu speziell ausgebildetes Befestigungselement auch nur auf ganz bestimmte Einsatzgebiete abgestellt ausgebildet werden kann.

Es ist Aufgabe der Erfindung, ein Befestigungselement zu schaffen, welches bei gleicher Ausgestaltung für vielerlei Befestigungsprobleme einsetzbar ist, also für viele unterschiedliche Befestigungsaufgaben ein einheitliches Befestigungselement eingesetzt werden kann.

Die Aufgabe wird durch die im Kennzeichenteil des Anspruchs 1 angegebenen Merkmale gelöst.

Der Einsteckbolzen ist durch die drei verschiedenen ineinandergehenden Ausbildungen ausgerüstet, als vollwertige Schraube eingesetzt zu werden oder aber ein Teil einer Harpunenbefestigung zu sein und wahlweise eine Bajonettverbindung zu bilden, die, abweichens von einer normalen Bajonettausbildung (Einrenkverbindung), vielstufig, das heißt auf unterschiedliche wirksame Bolzenlängen abstellbar ist.

Die Erfindung ist nun nicht auf den Einsteckbolzen begrenzt, der beispielsweise mit einem Normgewinde, insbesondere einer Normsteigung des Gewindes versehen ist und daher mit einer Normaufnahme, wie einer Mutter, oder, falls selbstschneidend oder materialverdrängend ausgebildet ist, in einer Bohrung in bekannter Weise wirkend einsetzbar ist, sondern es ist möglich, ganz spezielle Aufnahme zu schaffen. So kann die Aufnahme eine spezielle Mutter sein, sie kann als Blechmutter nur einen Gewindegang aufweisen oder andersartig mehrere Gewindegänge aufweisen. Die Verzahnungen können nun umlaufend durchgehend ausgebildet sein, es ist aber auch möglich, dann, wenn eine freie axiale Verschiebbarkeit in einem gewissen Winkelbereich erreicht werden soll, in der Aufnahme Zahnbereiche mit Zahnlücken anzuordnen, die im Sinne einer Bajonett-Verbindung durch Ein- bzw. Ausrenken befestigbar bzw. lösbar gestaltet sind.

Der Anwendungsbereich des erfindungsgemäßen Befestigungselementes wird erweitert, insbesondere jedoch die Montagezeit wesentlich verkürzt, wenn die Aufnahme für den Einsteckbolzen projiziert durchgehende, aus Zähnen gebildete Gewindegänge aufweist, wobei die Zähne federnd ausgebildet und mit einem in Einsteckrichtung verlaufenden Anstellwinkel angeordnet sind. Die Zähne können dann im Sinne einer Einrenkverbindung mit entsprechenden Freiräumen abwechseln, so daß der Einrenkvorgang (Winkelbewegung) entfällt und lediglich zum Lösen einer Ausrenkbewegung vorgenommen werden muß. Es ist aber auch möglich, die Zähne als federnde Zungen auszubilden, sie mit einem Anstellwinkel zu versehen, der ein einfaches Eindrücken des Einsteckbolzens in die Aufnahme möglich macht, allerdings zum Lösen die Bewegung vorzunehmen ist, wie sie von einer normalen Schraube her bekannt ist.

Durch die erfindungsgemäße Ausbildung ist eine Schnellverbindung, wie Einrenk-, Ratschund Harpunenverbindung, geschaffen, mit der zusätzlich höhere Befestigungswerte erreichbar sind. Durch Drehen des Einsteckbolzens oder auch der Mutter wird nämlich infolge der gewindegangähnlichen Eingriffsausbildungen ein schraubenartiger Anzug erreicht. Die konstruktive kinetische Umkehrung ist nicht spezifiziert ausgeführt, es ist jedoch möglich, die Aufnahme mit entsprechend den bisher aufgeführten Zahnausbildungen auszurüsten und die Gegenausbildung, also die einfachere Ausbildung, dem Einsteckbolzen zuzuordnen.

Wenn aber davon ausgegangen ist, daß der Einsteckbolzen die stärker ausgeprägte Ausbildung aufweist, so ergibt es sich ohne weiteres, diese Ausbildung zu einer Dreh- und/oder

Schubverbindung mit dem Befestigungteil heranzuziehen. Dieses können gleichartige Nasen
oder Gewindeteile sein, es ist aber auch möglich,
daß die Verzahnung im Bereich des Verbindungsendes mit dem Handgriff, der Armlehne od. dgl.
von der Verzahnung der Einsteckverbindung des
Bolzens abweicht und vorzugsweise durchgehend umlaufend ausgebildete steigungsfreie
Zähne aufweist.

Die Zeichnung zeigt mehrere Ausführungsbeispiele der Erfindung, nämlich

Figur 1  in schaubildlicher Darstellung einen
Einsteckbolzen, welcher einer Verstärkungseinlage zugeordnet ist,

Figur 2  eine schematische Darstellung eines
Querschnittes des Einsteckbolzens im Bereich
der Verzahnung,

Figur 3  eine schematische Draufsicht auf den
Einsteckbolzen,

Figuren 4 und 5  unterschiedlich ausgebildete
Aufnahmen für den Einsteckbolzen und

Figur 6  ein  weiteres  Ausführungsbeispiel
eines Befestigungselementes in Explosionsdarstellung.

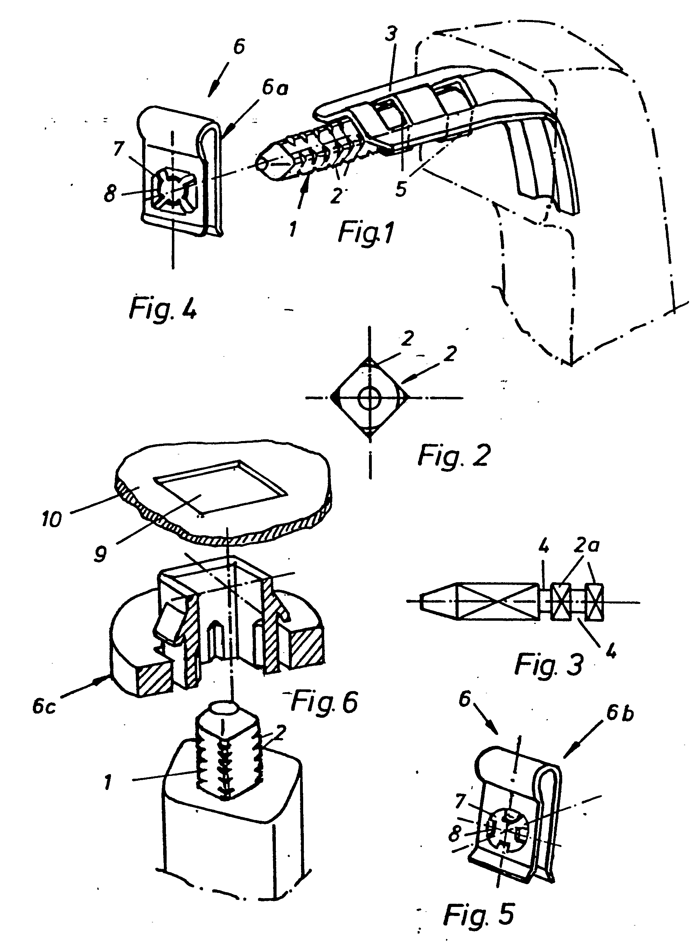

Der Einsteckbolzen 1 des Befestigungselementes besteht, wie insbesondere aus Fig. 2
hervorgeht, aus einem Vierkant, dessen Kanten
durch Bilden von Nuten mit Zähnen 2 versehen
sind. Die Zähne 2 bilden untereinander, also auch
von Kante zu Kante, einen durchgehend projizierten Gewindegang, so daß sie mit einer mutterähnlich gebildeten Aufnahme, wie die Gewindegänge einer Normschraube, einsetzbar sind. Der
Einsteckbolzen 1 ist in seinem Befestigungsbereich mit einer Verstärkungseinlage 3, wie insbesondere aus Fig. 3 hervorgeht, mit Zähnen 2a
versehen, welche durch umlaufende Nuten 4
gebildet sind, die im Ausführungsbeispiel keine
Steigung aufweisen. In diese Nuten 4 greifen
dreiseitig freigestanzte und abgebogene Laschen
5 der Verstärkungseinlage 3 ein oder untergreifen
auch die Nuten 4. Durch die Querschnittsanpassung in einem rechten Winkel der Verstärkungseinlage 3 wird der Einsteckbolzen 1
drehsicher gehalten und gegen Verschieben in
Achsrichtung durch den Eingrif der Laschen 5 in
die Nuten 4 gesichert.

Als Aufnahmen 6 für den Einsteckbolzen 1 sind
zwei Ausführungsbeispiele angeführt. Es handelt
sich um sogenannte Blechmuttern, wie sie vorwiegend bei Innenwandungen von Karosserien
verwendet werden. Die Aufnahme 6a nach Fig. 4
weist einen vierfach unterbrochenen ·Gewindegang auf. Die Unterbrechung, also der Zwischenraum 7 zwischen den stehengebliebenen
Zähnen 8, ist relativ klein ausgebildet, jedenfalls
kleiner als die Breite der Zähne 2 des Einsteckbolzens 1. Vorausgesetzt ist bei der Aufnahme 6a
ein federndes Material, so daß die Zähne 8, weil
sie in Einsteckrichtung ausgestellt sind, als Ratsche wirken. Die Aufnahme 6a gestattet daher
einmal eine harpunenartige Aufnahme des Einsteckbolzens 1, zusätzlich aber eine weitergehende Aufnahme des Einsteckbolzens 1 durch
Drehen, in diesem Falle des Einsteckbolzens 1.

Die Verbindung kann, da die Zwischenräume 7
der Aufnahme 6a geringer als die Zahnbreite der
Zähne 2 des Einsteckbolzens 1 ausgebildet sind,
nur im Sinne einer Schraube gelöst werden.

Die Aufnahme 6b nach Fig. 5 weicht von der
Aufnahme 6a in der Weise ab, daß die Zwischenräume 7 zwischen den Zähnen 8 größer
sind als die Zahnbreite der Zähne 2 des Befestigungsbolzens 1. Es ist ersichtlich, daß bei dieser
Kombination eine in beiden Längsrichtungen
vornehmbare Verschiebung des Einsteckbolzens
1 möglich ist, wenn Zahn auf Zahnlücke steht und
es sich demnach um eine Einrenkverbindung
beim Befestigen und beim Lösen handelt.

Die explosionsartig dargestellte Fig. 6 zeigt,
abgesehen von einer andersartigen Aufnahme
des Einsteckbolzens 1 mit einer vollständig formschlüssigen Verbindung, eine Aufnahme 6c, welche aus bedingt nachgiebigem Material besteht
und ursprünglich selbst keine Gegenausbildung
für die Zähne 2 des Einsteckbolzens 1 aufweist.
Die Gegenausbildung wird je nach Ausbildung
der Zähne 2 durch Verdrängung oder spanabhebend gebildet. Auch ist anzumerken, daß die
mittige Bohrung in der Aufnahme 6c weitgehend
dem Querschnitt des Einsteckbolzens 1 angepaßt
ist. Diese Ausbildungsform gestattet eine einfache Harpunenausbildung, nämlich dann, wenn
der Einsteckbolzen 1 lediglich in Achsrichtung
eingeschoben wird. Es ist aber eine zusätzliche
Sicherung gegen Ausziehen des Einsteckbolzens
1 möglich, nämlich dann, wenn eines der bereits
in Eingriff stehenden Teile um 45 Grad verdreht
wird.

Eine bisher nicht angeführte Möglichkeit einer
zusätzlichen Befestigung des Einsteckbolzens 1
ist auch der Fig. 6 zu entnehmen, nämlich ein
Spreizen einer nippelartig ausgebildeten Aufnahme, wie sie als Aufnahme 6c dargestellt ist, in
einen Durchbruch 9 einer Wandung 10.

**Ansprüche**

1.  Befestigungselement,  insbesondere  für
einen Handgriff oder eine Armlehne einer Karosserie-Innenwand, das aus einem Einsteckbolzen (1) und einer Aufnahme (6) besteht, wobei
der Einsteckbolzen (1) einen Querschnitt mit zwei
oder mehreren hervorstehenden Kanten aufweist,
die zumindest bereichsweise mit in Achsrichtung
hintereinander angeordneten Zähnen (2) versehen sind, wobei die Zähne (2) in Umfangrichtung
mit einem Abstand voneinander angeordnet sind,
welcher größer als die größte Breite der Zähne (2)
ist, und wobei die Aufnahme (6) eine für den
Querschnitt des Einsteckbolzens (1) angepaßte
Bohrung aufweist, die mit einer Verzahnung und
mit dieser abwechselnden Freiräumen (7) für die
freie axiale Verschiebbarkeit der Zähne (2) des
Einsteckbolzens (1) versehen ist, dadurch gekennzeichnet, daß die in Auszugsrichtung belasteten Flanken der Zähne (2) des Einsteckbolzens (1) eine gewindegangähnliche Steigung
aufweisen, und daß die Bohrung der Aufnahme (6, 6a, 6b, 6c) wahlweise mit einem Zahn (8) oder mit axial verlaufenden Verzahnungen versehen ist oder einen oder mehrere, zumindest projiziert durchgehende Gewindegänge aufweist.

2. Befestigungselement nach Anspruch 1, dadurch gekennzeichnet, daß die Aufnahme (6, 6a, 6b, 6c) für den Einsteckbolzen (1) projiziert durchgehende, aus Zähnen (8) gebildete Gewindegänge aufweist, wobei die Zähne federnd ausgebildet und mit einem in Einsteckrichtung verlaufenden Anstellwinkel angeordnet sind.

3. Befestigungselement nach Anspruch 1, dadurch gekennzeichnet, daß die Zähne (2a) des Einsteckbolzens (1) bis in den Bereich seines Verbindungsendes mit dem Handgriff, der Armlehne od. dgl. durchgeführt ist.

4. Befestigungselement nach Anspruch 3, dadurch gekennzeichnet, daß die Zähne (2a) im Bereich des Verbindungsendes mit dem Handgriff, der Armlehne od. dgl. von den Zähnen (2) der Einsteckverbindung des Einsteckbolzens (1) abweichen und vorzugsweise durchgehend umlaufend ausgebildete steigungsfreie Zähne (2a) sind.

## Claims

1. A fastening device, particularly for a handgrip or an arm-rest to be fastened to an internal wall of a vehicle body, the device comprising a stop pin (1) and a retaining element (6), in which, in cross-section, the stop pin (1) has two or more protruding edges at least some sections of which are provided with teeth (2) consecutively arranged in axial direction, in which the teeth in circumferential direction are spaced from one another at a distance exceeding their maximum width, and in which the retaining element (6) has a bore which matches the cross-section of the stop pin (1) and which is provided with a tooth system and, alternating therewith, with clearances (7) for unimpeded axial displacement of the teeth (2) of the stop pin (1), characterized in that those flanks of the pin's (1) teeth (2) that in the direction of withdrawal are subject to a load have a pitch like that of a screw thread, and in that the bore of the receptacle (6, 6a, 6b, 6c) is provided, selectively, with a tooth (8) or with an axially extending tooth system or with one or more, as least projectedly, continuous screw threads.

2. A fastening device according to claim 1, characterized in that the retaining element (6, 6a, 6b, 6c) for the stop pin (1) is provided with projectedly continuous threads formed of teeth (8), and in that the teeth are resilient and are arranged at an angle so that they are inclined in the direction of insertion.

3. A fastening device according to claim 1, characterized in that the teeth (2a) of the stop pin (1) extend into the pin section adjacent its connecting end with the hand-grip or arm-rest or the like.

4. A fastening device according to claim 3, characterized in that the teeth (2a) in the section adjacent the connecting end with the hand-grip or arm-rest or the like differ from the teeth (2) of the pin's (1) connection by insertion, and in that the teeth (2a) are preferably pitchless circumferentially continuous ones.

## Revendications

1. Elément de fixation, notamment pour une poignée ou un accoudoir d'une paroi intérieure de carrosserie, constitué par une vis à enfichage (1) et une pièce de réception (6), la vis à enfichage (1) ayant une section transversale avec deux ou plus d'arêtes saillantes qui sont munies au moins sur certaines zones, de dents (2) disposées l'une derrière l'autre dans le sens axial, les dents (2) étant espacées dans le sens périphérique de sorte que leur écartement soit plus grand que la plus grande largeur des dents (2) ; et le logement (6) comportant un alésage adapté à la section transversale de la vis à enfichage (1) qui est muni d'une denture et d'espaces libres (7) alternant avec les dents pour permettre le libre déplacement axial des dents (2) de la vis à enfichage (1), caractérisé en ce que les flancs des dents (2) de la vis à enfichage (1) soumis à une charge dans le sens de l'extraction ont un pas analogue à un filetage, et que l'alésage de la pièce de réception (6, 6a, 6b, 6c) est muni au choix d'une dent (8) ou de dentures s'étendant dans le sens axial, ou bien qu'il comporte une ou plusieurs spires de filetage continues au moins en projection.

2. Elément de fixation selon la revendication 1, caractérisé en ce que la pièce de réception (6, 6a, 6b, 6c) pour la vis à enfichage (1) comporte des spires de filetage continues en projection, constituées par des dents (8), les dents étant réalisées élastiques et étant disposées avec un angle d'incidence orienté dans le sens de l'enfichage.

3. Elément de fixation selon la revendication 1, caractérisé en ce que les dents (2a) de la vis à enfichage (1) vont jusque dans la zone de son extrémité de liaison avec la poignée, l'accoudoir, ou l'analogue.

4. Elément de fixation selon la revendication 3, caractérisé en ce que les dents (2a) dans la zone de l'extrémité de liaison avec la poignée, l'accoudoir, ou l'analogue diffèrent des dents (2) de la liaison d'enfichage de la vis à enfichage (1) et qu'elles sont de préférence des dents (2a) sans pas et continues tout autour de la vis.

Fig. 4

Fig.1

Fig. 2

Fig. 3

Fig. 6

Fig. 5